# EUROPEAN PATENT APPLICATION

(11) **EP 4 834 706 A1**
(43) Date of publication of application: **04.11.2026**
(21) Application number: 25745295.3
(22) Date of filing: 31.01.2025
(51) Int. Cl.: B62B 3/00, B62B 3/02, F24C 15/00

(54) **TROLLEY FOR COOKING AND OVEN SYSTEM HAVING SAME**

(30) Priority: 25.01.2024 KR 20240011311; 20.06.2024 KR 20240080600
(71) Applicant: Naman Inc., Gimpo-si, Gyeonggi-do 10049 (KR)
(72) Inventor: YOON, Moon Joon, Hwaseong-si Gyeonggi-do 18519 (KR); LIM, Hyeon Deok, Incheon 21318 (KR)
(74) Representative: Flügel Preissner Schober Seidel
(86) International application number: PCT/KR2025/099156
(87) International publication number: WO 2025/159630

(57) **Abstract**

Disclosed are a cooking trolley and an oven system including the same. According to an embodiment of the present disclosure, the cooking trolley comprises a rack assembly including a plurality of guide tracks configured to receive and support a plurality of cooking trays in a stacked arrangement, a base assembly configured to support the rack assembly and provided with wheels to enable movement thereof, and a rotation assembly configured to couple the base assembly and the rack assembly such that the rack assembly is rotatable on the base assembly.

## Description

### Technical Field

The present disclosure relates to a cooking trolley and an oven system including the same, and more particularly, to a cooking trolley in which an entire rack assembly is rotatably supported on an upper portion thereof so as to enable balanced cooking without requiring individual cooking trays to be rotated one by one, and to an oven system including the same.

### Background Art

In general, when a commercial oven or an oven for large-scale cooking is used, cooking is performed by inserting a trolley having a plurality of cooking trays stacked therein into a cooking chamber of the oven, closing the door of the oven, and supplying steam or hot air into the cooking chamber for a predetermined period of time.

If the steam or hot air is uniformly applied to the respective cooking trays, the food can be cooked evenly. In practice, however, there is a problem in that a relatively larger amount of steam or hot air is directed toward one side of the cooking trays.

Accordingly, to address this problem, during the cooking operation, an operator temporarily stops operation of the oven, withdraws the trolley from the cooking chamber, removes the cooking trays from the guide tracks one by one, rotates each cooking tray by 180 degrees, reinserts the cooking trays into the guide tracks, returns the trolley into the cooking chamber, and then resumes operation of the oven.

As a result, a significant amount of manual labor is required during cooking, thereby increasing the cooking time and consequently adversely affecting the cooking quality. This problem becomes more significant as the number of cooking trays increases.

### [Prior-Art Document]

### Patent Document:

Patent Document 1: Korean Patent No. 10-1510424, entitled "Horizontal Support Structure for a Trolley for a Commercial Oven or Warming Cabinet."

### Disclosure of the Invention

### Technical Goals

An object of the present disclosure is to provide a cooking trolley capable of changing the orientations of all cooking trays stacked therein at one time by allowing a rack assembly of the trolley to rotate, and an oven system including the same.

### Technical Solutions

According to an embodiment of the present disclosure, a cooking trolley may include a rack assembly including a plurality of guide tracks configured to receive and support a plurality of cooking trays in a stacked arrangement, a base assembly configured to support the rack assembly and provided with wheels to enable movement thereof, and a rotation assembly configured to couple the base assembly and the rack assembly such that the rack assembly is rotatable on the base assembly, wherein the rotation assembly includes a rotation shaft about which the rack assembly rotates, and wherein the rotation shaft includes an inclined region having an inclined side surface and a vertical region extending from an upper portion or a lower portion of the inclined region and having a vertical side surface.

The rotation assembly may include a lower assembly including a rotation support formed on the base assembly and provided with an insertion portion configured to receive the rotation shaft, and the rotation shaft, and a rotation coupling portion coupled to a lower portion of the rack assembly and configured to be coupled to the rotation support such that the rack assembly is rotatably coupled to the base assembly.

The rotation coupling portion may include a rotation rod having an internal through-hole configured to receive an upper portion of the rotation shaft, the rotation rod being rotatable about the rotation shaft, wherein the internal through-hole has a shape corresponding to that of the rotation shaft and includes an inclined region having an inclined side surface and a vertical region extending from an upper portion or a lower portion of the inclined region and having a vertical side surface.

The rack assembly may include vertical rack frames extending in a height direction of the rack assembly, the plurality of guide tracks connecting any two of the vertical rack frames and protruding toward an inner side of the rack assembly such that one side end of each cooking tray is slidably inserted, and a ball housing coupled to a lower end of at least one of the vertical rack frames and configured to contact an upper frame of the base assembly, the ball housing including a ball configured to roll when the rack assembly rotates while supporting the at least one vertical rack frame.

The ball housing may include a lower cover having a lower groove configured to receive the ball such that a portion of the ball is accommodated therein, a lower opening having a diameter smaller than a diameter of the ball and formed at a lower side thereof, and a region having a radius of curvature smaller than that of the ball such that the ball is movable upward and downward by a predetermined distance within the lower groove, and an upper cover having an upper groove configured to receive a portion of the ball and an upper opening formed at an upper side thereof such that a portion of the ball protrudes therethrough.

According to another embodiment of the present disclosure, a cooking trolley may include a rack assembly including a plurality of guide tracks configured to receive and support a plurality of cooking trays in a stacked arrangement, vertical rack frames extending in a height direction of the rack assembly, the plurality of guide tracks connecting any two of the vertical rack frames and protruding toward an inner side of the rack assembly such that one side end of each cooking tray is slidably inserted, and a ball housing coupled to a lower end of at least one of the vertical rack frames and configured to contact an upper frame of a base assembly, the ball housing including a ball configured to roll when the rack assembly rotates while supporting the at least one vertical rack frame, a base assembly configured to support the rack assembly and provided with wheels to enable movement thereof, and a rotation assembly configured to couple the base assembly and the rack assembly such that the rack assembly is rotatable on the base assembly.

According to an embodiment of the present disclosure, an oven system may include an oven and a cooking trolley configured to be inserted into and withdrawn from a cooking chamber of the oven, wherein the cooking trolley includes a rack assembly including a plurality of guide tracks configured to receive and support a plurality of cooking trays in a stacked arrangement, a base assembly configured to support the rack assembly and provided with wheels to enable movement thereof, and a rotation assembly configured to couple the base assembly and the rack assembly such that the rack assembly is rotatable on the base assembly, wherein the rotation assembly includes a rotation shaft about which the rack assembly rotates, and wherein the rotation shaft includes an inclined region having an inclined side surface and a vertical region extending from an upper portion or a lower portion of the inclined region and having a vertical side surface.

According to another embodiment of the present disclosure, an oven system may include an oven and a cooking trolley configured to be inserted into and withdrawn from a cooking chamber of the oven, wherein the cooking trolley includes a rack assembly including a plurality of guide tracks configured to receive and support a plurality of cooking trays in a stacked arrangement, vertical rack frames extending in a height direction of the rack assembly, the plurality of guide tracks connecting any two of the vertical rack frames and protruding toward an inner side of the rack assembly such that one side end of each cooking tray is slidably inserted, and a ball housing coupled to a lower end of at least one of the vertical rack frames and configured to contact an upper frame of a base assembly, the ball housing including a ball configured to roll when the rack assembly rotates while supporting the at least one vertical rack frame, a base assembly configured to support the rack assembly and provided with wheels to enable movement thereof, and a rotation assembly configured to couple the base assembly and the rack assembly such that the rack assembly is rotatable on the base assembly.

### Advantageous Effects

According to embodiments of the present disclosure, the cooking trolley and the oven system including the same are configured such that a rack assembly of the cooking trolley, on which cooking trays are stacked, is rotatable, thereby allowing the orientations of all of the cooking trays stacked on the rack assembly to be changed at one time.

Accordingly, it is unnecessary to manually withdraw the heated cooking trays from the rack assembly, change their orientations, and reinsert them into the rack assembly, thereby improving operational safety. In addition, since the orientations of all of the cooking trays can be changed within a short period of time, unnecessary extension of the cooking time can be prevented, thereby improving the cooking quality.

In addition, the ball housing is coupled to a lower portion of the rack assembly so that the rack assembly can be stably supported on the base assembly while being capable of rotating smoothly on the base assembly by means of the ball housing.

Furthermore, the characteristic shapes of the internal through-hole of the rotation rod and the rotation shaft enable stable engagement therebetween while facilitating insertion and removal thereof.

### Brief Description of Drawings

In order to more fully understand the drawings cited in the detailed description of the present disclosure, a brief description of each drawing is provided.
**FIG. 1** is a schematic perspective view illustrating a cooking trolley and an oven body according to an embodiment of the present disclosure.
**FIGS. 2** **and** **3** are views for explaining a rack assembly according to an embodiment of the present disclosure.
**FIGS. 4 to 7** are views for explaining a rotation assembly according to an embodiment of the present disclosure.
**FIG. 8** is a view for explaining a base assembly according to an embodiment of the present disclosure.
**FIG. 9** is a view for explaining rotation of the rack assembly according to an embodiment of the present disclosure.
**FIGS. 10** **and** **11** are views for explaining a ball housing according to an embodiment of the present disclosure.

### Best Mode for Carrying Out the Invention

The present disclosure may be embodied in various different forms and should not be construed as being limited to the embodiments set forth herein. Rather, these embodiments are provided so that the present disclosure will be thorough and complete, and will fully convey the scope of the present disclosure to those skilled in the art. Therefore, the present disclosure should be understood to include all modifications, equivalents, and substitutions falling within the spirit and scope of the present disclosure. In the following description, a detailed description of well-known functions or configurations incorporated herein will be omitted when it may obscure the subject matter of the present disclosure.

The terms "first," "second," and the like may be used herein to describe various elements, but these elements should not be limited by these terms. These terms are used only to distinguish one element from another.

The terminology used herein is for the purpose of describing particular embodiments only and is not intended to limit the present disclosure. As used herein, the singular forms are intended to include the plural forms as well, unless the context clearly indicates otherwise.

As used herein, the terms "include," "comprise," "have," and the like are intended to specify the presence of stated features, integers, steps, operations, elements, components, or combinations thereof, but do not preclude the presence or addition of one or more other features, integers, steps, operations, elements, components, or combinations thereof.

Hereinafter, embodiments of the present disclosure will be described in detail with reference to the accompanying drawings. Like reference numerals refer to like elements throughout the drawings.

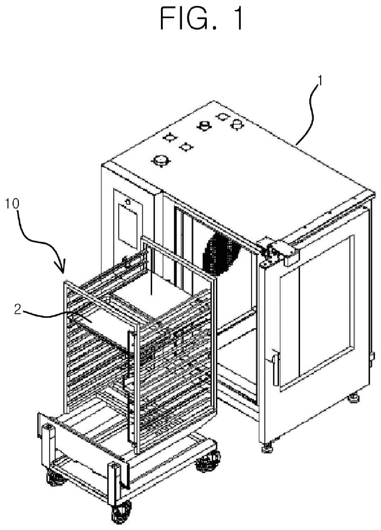

FIG. 1 is a schematic perspective view illustrating a cooking trolley and an oven body according to an embodiment of the present disclosure.

Referring to FIG. 1, an oven system according to an embodiment of the present disclosure may include an oven 1 and a cooking trolley 10.

The cooking trolley 10 may have a structure in which a plurality of guide tracks are vertically arranged so as to receive and support cooking trays 2 in a stacked arrangement. After placing food ingredients on the cooking trays 2, an operator inserts the cooking trays 2 into the guide tracks of the cooking trolley 10, moves the cooking trolley 10 into a cooking chamber of the oven 1, closes the door, and starts a cooking operation.

According to an embodiment, the oven 1 may be a steam convection oven. However, the present disclosure may be applied to various types of ovens regardless of the heating method of the oven 1, such as electric heating, convection heating, or light-wave heating. Hereinafter, a case in which the oven 1 is a steam convection oven will be described by way of example. However, the scope of the present disclosure is not limited thereto.

A steam convection oven is configured to inject steam into the cooking chamber and to control the humidity within the cooking chamber by adjusting the amount of steam. Accordingly, the steam convection oven may prevent food from drying out, enable large-scale cooking, and preserve the taste and aroma of food by suppressing evaporation thereof. Such ovens have recently been widely used in homes and commercial establishments. Steam or hot air may be distributed substantially uniformly throughout the cooking chamber by convection.

However, as described above, there is a limit to how uniformly steam or hot air can be distributed throughout the cooking chamber, and this problem becomes more pronounced as the size of the cooking chamber of the oven 1 increases.

Accordingly, in the related art, as described above, during a cooking operation, an operator temporarily stops operation of the oven 1, opens the door of the oven 1, and withdraws the cooking trolley 10 from the cooking chamber of the oven 1. The operator then removes the cooking trays 2 from the guide tracks one by one, changes their orientations by rotating each cooking tray by 180 degrees, and reinserts the cooking trays 2 into the guide tracks. After this procedure has been performed for all of the cooking trays 2, the cooking trolley 10 is returned into the cooking chamber of the oven 1, the door is closed, and the cooking operation is resumed.

To address these inconveniences and problems, the present disclosure provides a cooking trolley 10 in which the rack assembly, on which the cooking trays 2 are stacked, is rotatable on the base assembly.

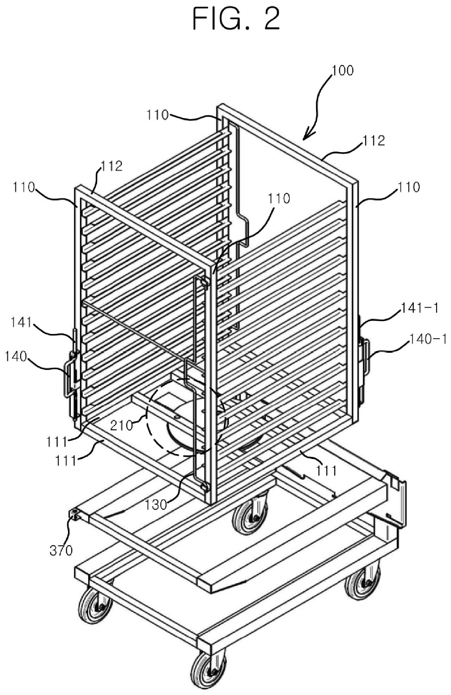

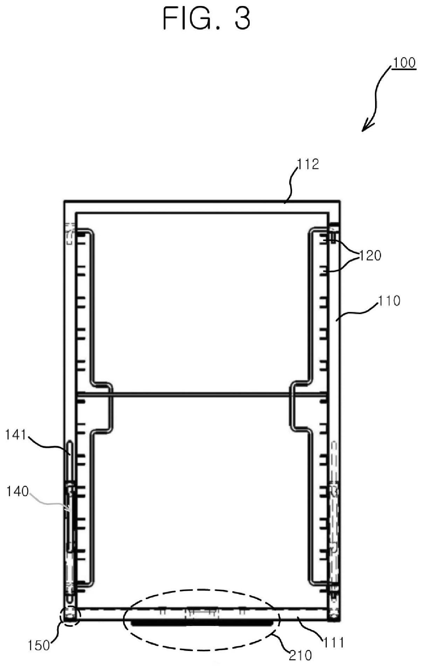

FIGS. 2 and 3 are views for explaining a rack assembly according to an embodiment of the present disclosure.

FIG. 2 is a view for explaining the rack assembly 100 of the cooking trolley 10, and FIG. 3 is a front view of the rack assembly 100. The rack assembly 100 includes a plurality of guide tracks 120 configured to receive and support a plurality of cooking trays 2 in a stacked arrangement.

More specifically, the rack assembly 100 includes vertical rack frames 110 extending in a height direction and a plurality of guide tracks 120 connecting two of the vertical rack frames 110, namely, two vertical rack frames located on the same side (e.g., the left side or the right side) with respect to the insertion direction of the cooking trolley 10, the plurality of guide tracks 120 being configured such that one side end of each cooking tray 2 is slidably inserted thereinto or supported thereon. The plurality of guide tracks 120 may protrude toward an inner side of the rack assembly 100.

The rack assembly 100 may further include lower rack frames 111 and upper rack frames 112.

The vertical rack frames 110, the lower rack frames 111, and the upper rack frames 112 may be configured to define a substantially rectangular parallelepiped shape. However, the present disclosure is not limited thereto.

The guide tracks 120 are disposed on oposite sides of the rack assembly 100 so as to face each other, and it will be readily understood by those skilled in the art that opposite ends of each cooking tray 2 are respectively inserted into the guide tracks 120 provided on the opposite sides.

In addition, retaining bars 130 for preventing the cooking trays 2 from being separated from the guide tracks 120 may be provided at front and rear portions of the rack assembly 100. Each retaining bar 130 may be rotatably coupled to at least one of the vertical rack frames 110 so as to be selectively opened and closed toward an inner side of the rack assembly 100.

As shown in FIG. 2, the retaining bars 130 may be provided at both the front and rear sides of the rack assembly 100 with respect to the insertion direction. This is because, according to the present disclosure, the rack assembly 100 is rotatable on the base assembly 300, and therefore the cooking trays 2 may be inserted into the rack assembly 100 from either the front side or the rear side thereof.

Meanwhile, a rotation coupling portion 210, which forms part of the rotation assembly 200, may be provided at a lower portion of the rack assembly 100. A detailed description of the rotation coupling portion 210 will be provided later.

In addition, at least one of the vertical rack frames 110 may be provided with a locking device 140 configured to selectively allow the rack assembly 100 to rotate on the base assembly 300 or to prevent further rotation of the rack assembly 100.

As shown in FIGS. 2 and 3, the locking device 140 may be disposed at a predetermined position adjacent to a lower portion of at least one of the vertical rack frames 110. The locking device 140 may be installed at a position such that a locking pin 141 provided therein is movable to a locking plate 370 disposed at a position lower than a lower end of the rack assembly 100.

In the embodiment shown in FIG. 2, the locking device 140 including the locking pin 141 is illustrated as being provided on the rack assembly 100, and the locking plate 370 is illustrated as being provided on the base assembly 300. However, the present disclosure is not limited thereto, and the arrangement may be reversed in other embodiments.

For example, the locking device 140 may include the locking pin 141 configured to be selectively inserted into and withdrawn from the locking plate 370 provided on the base assembly 300. The locking pin 141 may be configured to move upward and downward along a predetermined path formed within the locking device 140.

For example, when the locking pin 141 is inserted into the locking plate 370, rotation of the rack assembly 100 may be prevented. When the locking pin 141 is withdrawn from the locking plate 370 and fixed in a predetermined manner, the rack assembly 100 may again be placed in a rotatable state.

Various embodiments of the locking device 140 are possible. In any case, it is sufficient that the locking device 140 is configured to selectively allow the rack assembly 100 to rotate on the base assembly 300 or to prevent rotation thereof.

As shown in FIG. 2, the locking device 140 may include a first locking device 140 and a second locking device 140-1. Accordingly, after rotation of the rack assembly 100 has been prevented by the first locking device 140, the rack assembly 100 may be rotated by a desired angle (for example, 180 degrees), and the second locking device 140-1 may then be used to prevent further rotation of the rack assembly 100. The second locking device 140-1 may likewise include a second locking pin 141-1.

Meanwhile, the rack assembly 100 may include at least one ball housing 150. For example, the ball housing 150 may be coupled to a lower end of at least one of the vertical rack frames 110.

When the rack assembly 100 is coupled to the base assembly 300, the ball housing 150 may contact the base assembly 300 and support the vertical rack frames 110 to which the ball housing 150 is coupled. The ball housing 150 may include a ball configured to contact a predetermined portion of the base assembly 300. When the rack assembly 100 rotates while the ball is in contact with the predetermined portion of the base assembly 300, the ball rolls, thereby allowing the rack assembly 100 to rotate smoothly.

That is, the ball housing 150 may support the rack assembly 100 while allowing the rack assembly 100 to rotate smoothly on the base assembly 300. Without the ball housing 150, when the rack assembly 100 is coupled to the base assembly 300, the rack assembly 100 may either be in complete contact with an upper portion of the base assembly 300 or be spaced apart therefrom by a predetermined distance. In the former case, in order to rotate the rack assembly 100, the rack assembly 100 must first be lifted slightly and then rotated. However, this requires a considerable amount of force when a large number of cooking trays 2 loaded with food ingredients are stacked on the rack assembly 100. In the latter case, the rack assembly 100 may wobble while coupled to the base assembly 300, thereby causing safety concerns.

Accordingly, the ball housing 150 may be provided to maintain stable coupling between the rack assembly 100 and the base assembly 300 while allowing the rack assembly 100 to rotate smoothly on the base assembly 300.

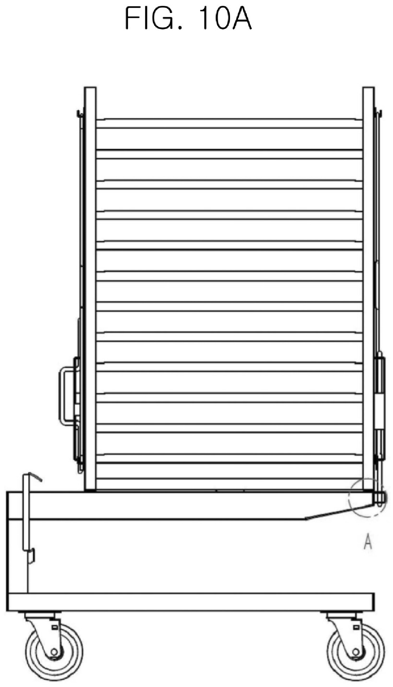

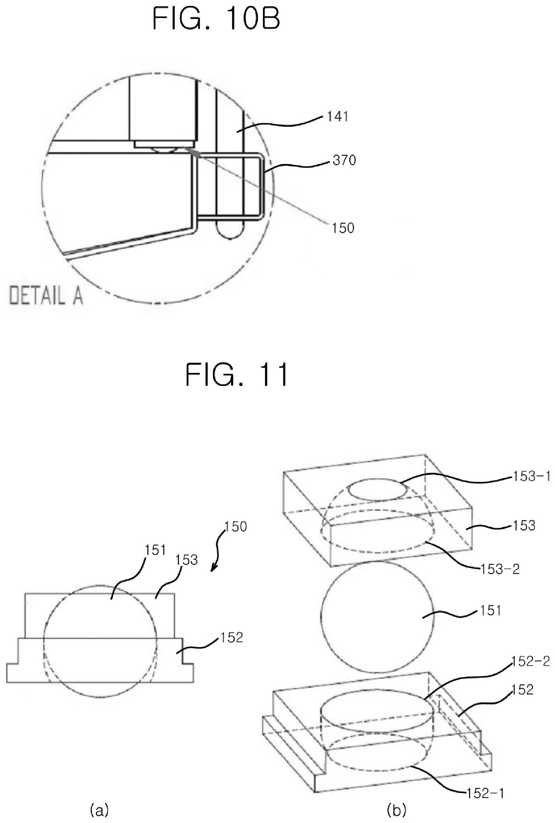

According to an embodiment, the ball housings 150 may be respectively coupled to lower ends of the four vertical rack frames 110. In addition, each of the vertical rack frames 110 may be implemented as a hollow tube. In this case, each ball housing 150 may be fitted into the hollow tube and coupled to the corresponding vertical rack frame 110. A detailed example of the ball housing 150 will be described later with reference to FIGS. 10 and 11.

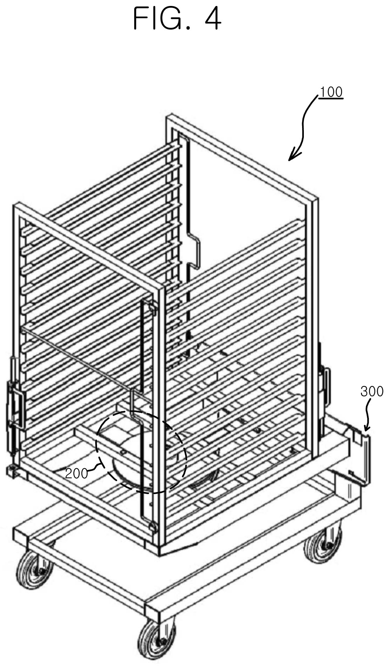

A rotation coupling portion 210, which forms part of the rotation assembly 200 (see FIG. 4), may be provided at a lower portion of the rack assembly 100. The rotation assembly 200 may be configured to couple the rack assembly 100 to the base assembly 300 while allowing the rack assembly 100 to rotate on the base assembly 300.

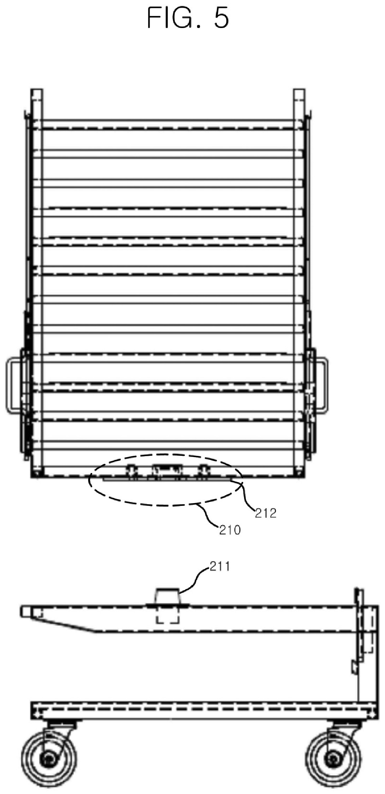

The rotation assembly 200 may include the rotation coupling portion 210 and a lower assembly including a rotation shaft 211 and a rotation support 220 (see FIG. 5). According to an embodiment, the rotation coupling portion 210 may be coupled to the rack assembly 100, and the rotation support 220 may be coupled to the base assembly 300. However, the present disclosure is not limited thereto, and those skilled in the art will readily appreciate that the rotation assembly 200 may be coupled to the rack assembly 100 and the base assembly 300 in various ways.

The rack assembly 100 may be rotatably coupled, through the rotation assembly 200, to the base assembly 300, which supports the rack assembly 100 and is provided with wheels to enable movement thereof. An example of such a configuration will be described below with reference to FIGS. 4 to 7.

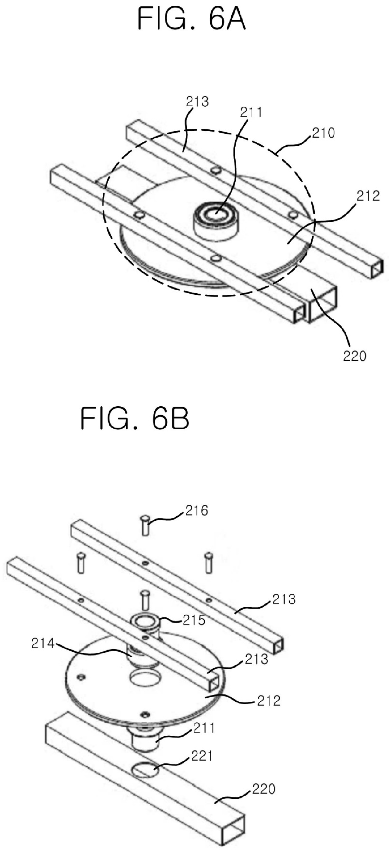

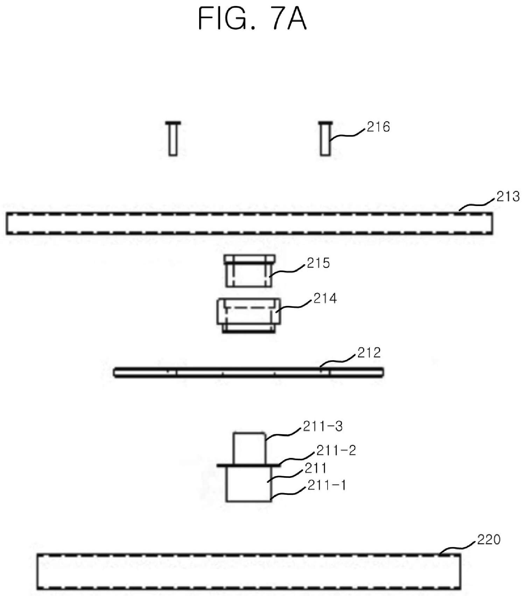

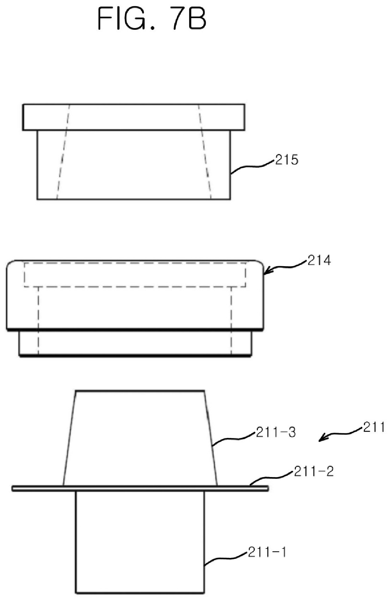

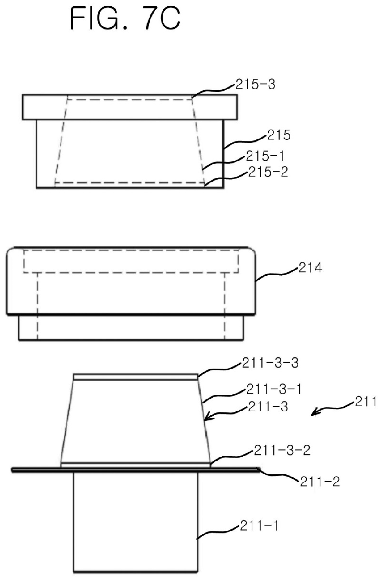

FIGS. 4 to 7 are views for explaining a rotation assembly according to an embodiment of the present disclosure. FIG. 4 illustrates a state in which the rack assembly 100 and the base assembly 300 are coupled through the rotation assembly 200. FIG. 5 illustrates a state in which the rack assembly 100 and the base assembly 300 are separated from each other. FIG. 6 is an assembled view of the rotation assembly 200, and FIG. 7 is an exploded view of the rotation assembly 200.

Referring to FIGS. 4 to 7, the cooking trolley 10 according to an embodiment of the present disclosure may include the rack assembly 100, the base assembly 300, and the rotation assembly 200 configured to rotatably couple the rack assembly 100 and the base assembly 300.

The rotation assembly 200 may include the rotation coupling portion 210 and a lower assembly including a rotation support 220 and a rotation shaft 211.

As described above, according to an embodiment of the present disclosure, the rotation coupling portion 210 may be coupled to a lower portion of the rack assembly 100, and the lower assembly may be coupled to the base assembly 300.

According to an embodiment, the lower assembly may be provided at an upper portion of the base assembly 300, and the rotation coupling portion 210 may be coupled thereto.

The rotation support 220 may be provided with an insertion portion 221 configured to receive and secure the rotation shaft 211. The insertion portion 221 may be implemented as a recess configured to receive the rotation shaft 211 or as a through-hole through which a lower portion of the rotation shaft 211 extends.

The rotation coupling portion 210 may be coupled to the lower portion of the rack assembly 100 and coupled to the rotation shaft 211 secured to the rotation support 220, such that the rack assembly 100 is rotatably coupled to the base assembly 300.

As shown in FIGS. 5 and 6, the rotation support 220 and the rotation coupling portion 210 may be coupled to each other to form the rotation assembly 200.

The rotation coupling portion 210 may include a rotation plate 212 and a rotation rack 213. In addition, the rotation coupling portion 210 may include a rotation rod 215 and a rotation rod cover 214.

The rotation shaft 211 may be inserted into and secured to the insertion portion 221 formed in the rotation support 220.

As shown in FIGS. 7A and 7B, the rotation shaft 211 may include a lower rotation shaft 211-1 and an upper rotation shaft 211-3 having different diameters. A shoulder 211-2 formed between the lower rotation shaft 211-1 and the upper rotation shaft 211-3 may support the rotation plate 212.

In addition, the upper rotation shaft 211-3 may extend upward through the through-hole of the rotation plate 212, and the upper rotation shaft 211-3 may be fitted into the rotation rod 215 while the rotation rod cover 214 is coupled to the rotation rod 215. The rotation rod 215 and the rotation rod cover 214 may be press-fitted to each other in advance and then fitted over the upper portion of the rotation shaft 211, namely, the upper rotation shaft 211-3. The rotation rod cover 214 may protect the rotation rod 215 and the upper rotation shaft 211-3. The lower rotation shaft 211-1 may be fitted into the insertion portion 221 of the rotation support 220 and fixedly coupled thereto.

Accordingly, the rotation rod 215 and the rotation plate 212 may be configured to rotate together. The coupling structure between the rotation shaft 211 and the rotation rod 215 is not limited thereto, and those skilled in the art will readily appreciate that various modifications and alternative embodiments are possible.

Meanwhile, the embodiment illustrated in FIG. 7A exemplarily shows a case in which both the side surface of the vertical cross-section of the upper rotation shaft 211-3 and the side surface of the vertical cross-section of the through-hole formed in the rotation rod 215 are vertical, that is, a case in which both the upper rotation shaft 211-3 and the through-hole formed in the rotation rod 215 have cylindrical shapes. In such a case, the through-hole of the rotation rod 215 must have a diameter slightly larger than that of the upper rotation shaft 211-3 in order to allow fitting assembly.

However, due to the clearance between the diameter of the through-hole of the rotation rod 215 and the diameter of the upper rotation shaft 211-3, the entire rack assembly 100 may creak or wobble in the horizontal direction, thereby reducing the stability of the coupled state. In order to improve the stability, it is desirable to minimize such clearance. However, in that case, the rotation rod 215 must be inserted onto or removed from the rotation shaft 211 (that is, lifted therefrom) in a precisely vertical direction. If the insertion or removal angle is even slightly inclined, insertion or removal becomes difficult.

In particular, the rotation rod 215 may be integrally coupled to the rack assembly 100, and the rack assembly 100 and the base assembly 300 may frequently need to be separated by a user, for example, for cleaning the rack assembly 100. Accordingly, since the rack assembly 100 is relatively heavy, it may be difficult to accurately lift or lower the rack assembly 100 in a vertical direction with respect to the upper rotation shaft 211-3, thereby significantly reducing usability.

Accordingly, in order to solve these problems, the rotation rod 215 and the rotation shaft 211 may be configured to have the technical features illustrated in FIG. 7B.

Referring to FIG. 7B, the rotation shaft 211 may include a region having a frustoconical shape with an inclined side surface. The region may be formed on the upper rotation shaft 211-3.

For example, as illustrated in FIG. 7B, the upper rotation shaft 211-3 may be configured to have a frustoconical shape. That is, the upper rotation shaft 211-3 may have a diameter that increases from an upper end toward a lower end, and thus the side surface of the upper rotation shaft 211-3 may be inclined.

The through-hole formed in the rotation rod 215 may likewise be configured to have a frustoconical shape corresponding to that of the upper rotation shaft 211-3, that is, a shape having an inclined side surface.

When the rotation shaft 211 and the through-hole of the rotation rod 215 have such shapes, substantially no clearance is formed therebetween when the rotation shaft 211 and the rotation rod 215 are fitted together, so that a highly stable coupled state may be maintained. In addition, even when the rack assembly 100 together with the rotation rod 215 is withdrawn upward or inserted downward, insertion and removal may be performed easily even if the movement is not precisely vertical.

The lower diameter and the upper diameter of the through-hole of the rotation rod 215 may be substantially identical to the lower diameter and the upper diameter of the upper rotation shaft 211-3, respectively. Alternatively, even when the lower diameter and the upper diameter of the through-hole of the rotation rod 215 are slightly smaller than the lower diameter and the upper diameter of the upper rotation shaft 211-3, respectively, a stable coupled state may still be maintained.

Meanwhile, although the shapes of the rotation shaft 211 and the through-hole of the rotation rod 215 illustrated in FIG. 7B are advantageous in facilitating attachment to and detachment from the rack assembly 100, if there is a difference in the inclination angles of the side surfaces of the rotation shaft 211 and the through-hole of the rotation rod 215, or if manufacturing tolerances occur, the rack assembly 100 may wobble even when coupled to the base assembly 300, or the rack assembly 100 may fail to be completely seated on the base assembly 300.

Accordingly, in order to solve these problems, the rotation shaft 211 and the through-hole of the rotation rod 215 may each include, as described above, an inclined region having an inclined side surface, and further include a vertical region having a vertical side surface at at least one of an upper portion and a lower portion of the inclined region. An example thereof is illustrated in FIG. 7C.

Referring to FIG. 7C, which illustrates another embodiment of the present disclosure, the rotation shaft 211 may include an inclined region 211-3-1 having a frustoconical shape with an inclined side surface, and may further include a vertical region 211-3-3 or 211-3-2 extending from an upper portion or a lower portion of the inclined region and having a vertical side surface. The inclined region 211-3-1 and the at least one vertical region 211-3-3 or 211-3-2 may be formed on the upper rotation shaft 211-3, which is coupled to the rotation rod 215.

Likewise, the through-hole of the rotation rod 215 may include an inclined region 215-1 having a frustoconical shape with an inclined side surface, and may further include a vertical region 215-3 or 215-2 extending from an upper portion or a lower portion of the inclined region and having a vertical side surface.

In addition, the rotation shaft 211 may be configured such that vertical regions are provided at both an upper portion and a lower portion of the inclined region 211-3-1. That is, an upper vertical region 211-3-3 may be formed above the inclined region 211-3-1, and a lower vertical region 211-3-2 may be formed below the inclined region 211-3-1.

Accordingly, the inclined region 211-3-1, in which the diameter of the horizontal cross-section decreases from the lower end toward the upper end, facilitates attachment and detachment of the rack assembly 100 coupled to the rotation rod 215. At the same time, the vertical region 211-3-3 or 211-3-2 enables the rotation shaft 211 and the rotation rod 215 to be brought into close surface contact when coupled together, thereby preventing wobbling.

Meanwhile, the rotation shaft 211, the rotation rod 215, and the rotation rod cover 214 are exposed to the high-temperature environment inside the oven. If the rotation shaft 211, the rotation rod 215, and the rotation rod cover 214 are formed of the same material, they may adhere to one another, making separation difficult. Accordingly, it may be desirable that at least the rotation shaft 211 and the rotation rod 215 are formed of different materials.

According to an embodiment, the rotation shaft 211 may be made of stainless steel, and the rotation rod 215 may be made of copper. In addition, the rotation rod cover 214 may be made of stainless steel. However, the present disclosure is not limited thereto, provided that at least the rotation shaft 211 and the rotation rod 215 are formed of different materials.

The rotation plate 212 may be provided with a through-hole through which the rotation shaft 211 extends, and may be fitted onto the rotation shaft 211 through the through-hole. The rotation plate 212 may likewise be fitted onto the rotation shaft 211 while being integrally coupled to the rotation rod cover 214. Accordingly, the rotation plate 212 may rotate about the rotation shaft 211.

The rotation rack 213 may be fixedly coupled to an upper portion of the rotation plate 212 and may connect the lower rack frames 111 on opposite sides of the rack assembly 100. In the present specification, the insertion direction of the cooking trolley 10 will be referred to as the front-rear direction, and the left-right direction with respect to the front-rear direction will be referred to as the lateral direction. By connecting the lower rack frames 111 on opposite sides of the rack assembly 100, the rotation rack 213 rotates in synchronization with the rotational movement of the rotation plate 212, thereby causing the rack assembly 100 to rotate.

The rotation rack 213 may be coupled to the rotation plate 212 by means of fixing pins 216. However, the present disclosure is not limited thereto.

Although the present specification illustrates an embodiment in which two rotation racks 213 are disposed at positions symmetrical with respect to the rotation shaft, the present disclosure is not limited thereto. Various embodiments are possible with respect to the coupling structure between the rotation plate 212 and the rotation racks 213, as well as the number of the rotation racks 213.

Although the present specification has described the embodiment illustrated in the drawings by way of example, the rotation assembly 200 may have any structure that allows the rack assembly 100 to rotate on the base assembly 300.

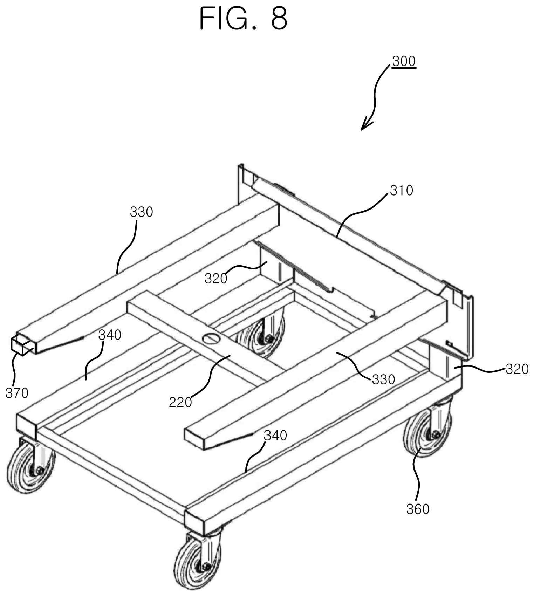

Meanwhile, an exemplary configuration of the base assembly 300 will be described below with reference to FIG. 8.

FIG. 8 is a view for explaining a base assembly according to an embodiment of the present disclosure.

As illustrated in FIG. 8, the base assembly 300 may include vertical frames 320 and upper frames 330. The rotation support 220 may be coupled to the base assembly 300 while connecting the upper frames 330. The base assembly 300 may further include a heat shielding plate 310 and lower frames 340. A plurality of wheels 360 for moving the base assembly 300 may be provided at lower portions of the lower frames 340.

The heat shielding plate 310 may be disposed at a rear side of the base assembly 300 with respect to the insertion direction of the trolley, and may prevent heat from being discharged downward when the oven door is closed. The heat shielding plate 310 may be coupled to the vertical frames 320.

The upper frames 330 may extend in a longitudinal direction, that is, the insertion direction, from the vertical frames 320 or the heat shielding plate 310, and may be disposed in front of the heat shielding plate 310.

A locking plate 370 to which the locking device 140 of the rack assembly 100 may be coupled may be provided at an end of at least one of the upper frames 330. As described above, when the locking plate 370 and the locking device 140 are coupled to each other, rotation of the rotation coupling portion 210 of the rack assembly 100 may be prevented.

The rotation coupling portion 210 may be rotatably coupled to the rotation shaft 211 secured to the rotation support 220. For this purpose, the rotation support 220 may be provided with a receiving recess or a through-hole configured to receive the rotation shaft 211, such that the rotation coupling portion 210 is rotatable on the rotation support 220.

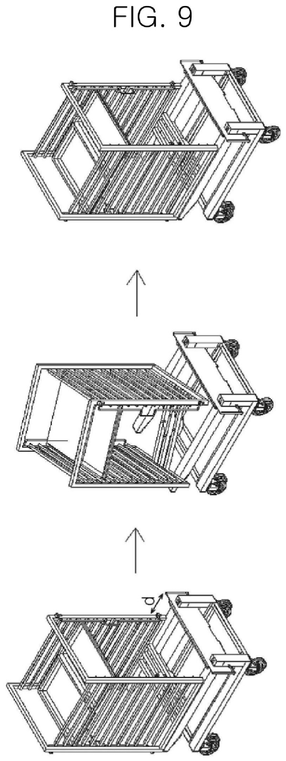

Preferably, the rotation support 220 may be disposed at a position such that a predetermined separation distance (d in FIG. 9) is defined between a rear end of the rack assembly 100 and the heat shielding plate 310 provided at the rear side of the base assembly 300.

That is, in order for the rack assembly 100 to rotate on the base assembly 300, a predetermined separation distance from the heat shielding plate 310 should be secured. Otherwise, the rack assembly 100 may be prevented from rotating due to interference with the heat shielding plate 310. It will be appreciated that the separation distance may vary depending on the length of the rack assembly 100 in the front-rear direction.

Accordingly, it may be desirable that the rotation support 220 is positioned such that the required separation distance is secured in consideration of the length of the rack assembly 100.

As illustrated in FIG. 9, in the cooking trolley 10 according to the present disclosure, the rack assembly 100 itself is rotatable on the base assembly 300. Accordingly, it is unnecessary to individually remove and reverse the cooking trays 2 from the cooking trolley 10, thereby reducing the effort required to change the orientations of the cooking trays 2.

Meanwhile, as described above, the ball housings 150 may be coupled to the lower ends of at least one of the vertical rack frames 110 included in the rack assembly 100. Accordingly, the rack assembly 100 may be stably supported in contact with the base assembly 300 while being allowed to rotate smoothly thereon.

An exemplary embodiment thereof will be described below with reference to FIGS. 10 and 11.

FIGS. 10 and 11 are views for explaining a ball housing according to an embodiment of the present disclosure.

As illustrated in FIGS. 10A and 10B, a ball housing 150 may be coupled to a lower end of at least one of the vertical rack frames 110.

When the rack assembly 100 is coupled to the base assembly 300, the ball housing 150 may contact a predetermined upper portion of the base assembly 300 (for example, an upper surface of the upper frame 330) and support the vertical rack frame 110 to which the ball housing 150 is coupled. The ball housing 150 may include a ball 151 configured to contact the above-described portion of the base assembly 300 (for example, the upper surface of the upper frame 330). When the rack assembly 100 rotates while the ball 151 is in contact with the above-described portion of the base assembly 300, the ball 151 rolls within the ball housing 150, thereby allowing the rack assembly 100 to rotate smoothly.

That is, the ball housing 150 may support the rack assembly 100 while allowing the rack assembly 100 to rotate smoothly on the base assembly 300.

As illustrated in FIG. 11, the ball housing 150 may include a ball 151, a lower cover 152, and an upper cover 152.

Here, the terms "lower" and "upper" used in connection with the lower cover 151 and the upper cover 152 are merely used with reference to the orientation illustrated in FIG. 11, and do not indicate the actual positional relationship of the ball housing 150 when coupled to the vertical rack frame 110 during use. As illustrated in FIG. 10B, the ball housing 150 may be coupled to the vertical rack frame 110 in an inverted orientation relative to that shown in FIG. 11.

The lower cover 151 may be provided with a lower recess configured to receive the ball 151. A portion of the ball 151 may be received in the lower recess, which may have a concave shape as illustrated in FIG. 11. A lower protrusion opening 151-1 through which a portion of the ball 151 protrudes may be formed in a lower portion of the lower cover 151, and an upper protrusion opening 151-2 may be formed in an upper portion of the lower cover 151.

The diameter of the lower protrusion opening 151-1 may be smaller than the diameter of the ball 151 so that the ball 151 is prevented from passing through the lower protrusion opening 151-1. The diameter of the upper protrusion opening 151-2 may be identical or substantially identical to the diameter of the ball 151 so that the ball 151 may be inserted into the lower recess.

In addition, the height of the lower cover 151 may be smaller than the diameter of the ball 151, and the lower recess may include a region having a radius of curvature smaller than that of the ball 151. For example, the radius of curvature of an upper portion of the lower recess may be smaller than the radius of curvature of the ball 151, whereas the radius of curvature of a lower portion thereof may be substantially identical or similar to the radius of curvature of the ball 151. Accordingly, since the radius of curvature of the upper portion of the lower recess is smaller than that of the ball 151, the ball 151 may move upward and downward within the corresponding region when a downward force is applied to the ball 151. However, because the diameter of the lower protrusion opening 151-1 is smaller than the diameter of the ball 151, the ball 151 may move upward and downward only within the corresponding range and is prevented from escaping from the lower cover 151.

According to an embodiment, the entire lower recess may have a radius of curvature smaller than that of the ball 151. Even in such a case, since the height of the lower cover 151 is smaller than the diameter of the ball 151, the intended effect may still be achieved. Alternatively, as described above, only an upper portion of the lower recess may have a radius of curvature smaller than that of the ball 151, while the remaining portion may have a radius of curvature substantially identical to that of the ball 151.

Due to the technical features of the lower cover 151 and the lower recess, the ball 151 is allowed to move upward and downward. Accordingly, when the rack assembly 100 comes into contact with the base assembly 300, the ball 151 moves toward the lower protrusion opening 151-1. When the rack assembly 100 is not in contact with the base assembly 300, the ball 151 moves back toward the upper protrusion opening 151-2, thereby providing a cushioning effect when the rack assembly 100 comes into contact with the base assembly 300.

The upper cover 153 may likewise be provided with an upper protrusion opening 153-1 and a lower protrusion opening 153-2. According to an embodiment, an upper recess of the upper cover 153 may have a radius of curvature substantially identical to that of the ball 151. The diameter of the upper protrusion opening 153-1 may be smaller than the diameter of the ball 151, and the diameter of the lower protrusion opening 153-2 may be substantially identical to the diameter of the ball 151.

A portion of the ball 151 protrudes outward through the upper protrusion opening 153-1 of the upper cover 153, and the protruding portion of the ball 151 comes into contact with the base assembly 300. Accordingly, after the ball 151 is received in the lower recess of the lower cover 152, the upper cover 153 may be placed thereon, thereby allowing the ball housing 150 to be easily assembled.

The ball 151 is configured to roll within the ball housing 150. Accordingly, when the rack assembly 100 rotates while the ball 151 is in contact with a predetermined portion of the base assembly 300, the ball 151 rolls, thereby allowing the rack assembly 100 to rotate smoothly even while remaining in contact with the base assembly 300.

An oven system according to the present disclosure includes an oven 1 and a cooking trolley 10.

As described above, the cooking trolley 10 includes the rack assembly 100, the base assembly 300, and the rotation assembly 200 configured to couple the base assembly 300 and the rack assembly 100 while allowing the rack assembly 100 to rotate on the base assembly 300.

The foregoing description of the present disclosure has been provided for purposes of illustration. Those skilled in the art will appreciate that various modifications, substitutions, and changes may be made without departing from the spirit and essential characteristics of the present disclosure. Accordingly, the embodiments described above are intended to be illustrative in all respects and not restrictive. For example, individual elements described as being implemented in a single form may be implemented in a distributed manner. Likewise, elements described as being implemented in a distributed manner may be implemented in an integrated form. Accordingly, the scope of the present disclosure should be defined by the appended claims rather than by the foregoing description, and all changes, modifications, and equivalents falling within the meaning and scope of the appended claims are intended to be embraced therein.

### Industrial Applicability

The present disclosure is applicable to a cooking trolley and an oven system including the same.

## Claims

1. A cooking trolley, comprising:
a rack assembly including a plurality of guide tracks configured to receive and support a plurality of cooking trays in a stacked arrangement;
a base assembly configured to support the rack assembly and provided with wheels to enable movement thereof; and
a rotation assembly configured to couple the base assembly and the rack assembly such that the rack assembly is rotatable on the base assembly,
wherein the rotation assembly includes a rotation shaft about which the rack assembly rotates,
wherein the rotation shaft includes:
an inclined region having an inclined side surface; and
a vertical region extending from an upper portion or a lower portion of the inclined region and having a vertical side surface.

2. The cooking trolley of claim 1,
wherein the rotation assembly comprises:
a lower assembly including a rotation support formed on the base assembly and provided with an insertion portion configured to receive the rotation shaft, and the rotation shaft; and
a rotation coupling portion coupled to a lower portion of the rack assembly and configured to be coupled to the rotation support such that the rack assembly is rotatably coupled to the base assembly.

3. The cooking trolley of claim 2,
wherein the rotation coupling portion comprises:
a rotation rod having an internal through-hole configured to receive an upper portion of the rotation shaft, the rotation rod being rotatable about the rotation shaft,
wherein the internal through-hole has a shape corresponding to that of the rotation shaft and includes:
an inclined region having an inclined side surface; and
a vertical region extending from an upper portion or a lower portion of the inclined region and having a vertical side surface.

4. The cooking trolley of claim 1,
wherein the rack assembly comprises:
vertical rack frames extending in a height direction of the rack assembly;
the plurality of guide tracks connecting any two of the vertical rack frames and protruding toward an inner side of the rack assembly such that one side end of a cooking tray is slidably inserted; and
a ball housing coupled to a lower end of at least one of the vertical rack frames and configured to contact an upper frame of the base assembly, the ball housing including a ball configured to roll when the rack assembly rotates while supporting the at least one vertical rack frame.

5. The cooking trolley of claim 4,
wherein the ball housing comprises:
a lower cover having
a lower groove configured to receive the ball such that a portion of the ball is accommodated therein,
a lower opening having a diameter smaller than a diameter of the ball and formed at a lower side thereof, and
a region having a radius of curvature smaller than that of the ball such that the ball is movable upward and downward by a predetermined distance within the lower groove; and
an upper cover having
an upper groove configured to receive a portion of the ball, and
an upper opening formed at an upper side thereof such that a portion of the ball protrudes therethrough.

6. A cooking trolley, comprising:
a rack assembly including:
a plurality of guide tracks configured to receive and support a plurality of cooking trays in a stacked arrangement;
vertical rack frames extending in a height direction of the rack assembly, the plurality of guide tracks connecting any two of the vertical rack frames and protruding toward an inner side of the rack assembly such that one side end of each cooking tray is slidably inserted; and
a ball housing coupled to a lower end of at least one of the vertical rack frames and configured to contact an upper frame of a base assembly, the ball housing including a ball configured to roll when the rack assembly rotates while supporting the at least one vertical rack frame;
the base assembly configured to support the rack assembly and provided with wheels to enable movement thereof; and
a rotation assembly configured to couple the base assembly and the rack assembly such that the rack assembly is rotatable on the base assembly.

7. An oven system, comprising:
an oven; and
a cooking trolley configured to be inserted into and withdrawn from a cooking chamber of the oven,
wherein the cooking trolley comprises:
a rack assembly including a plurality of guide tracks configured to receive and support a plurality of cooking trays in a stacked arrangement;
a base assembly configured to support the rack assembly and provided with wheels to enable movement thereof; and
a rotation assembly configured to couple the base assembly and the rack assembly such that the rack assembly is rotatable on the base assembly,
wherein the rotation assembly includes a rotation shaft about which the rack assembly rotates,
wherein the rotation shaft includes:
an inclined region having an inclined side surface; and
a vertical region extending from an upper portion or a lower portion of the inclined region and having a vertical side surface.

8. An oven system, comprising:
an oven; and
a cooking trolley configured to be inserted into and withdrawn from a cooking chamber of the oven,
wherein the cooking trolley comprises:
a rack assembly including:
a plurality of guide tracks configured to receive and support a plurality of cooking trays in a stacked arrangement;
vertical rack frames extending in a height direction of the rack assembly, the plurality of guide tracks connecting any two of the vertical rack frames and protruding toward an inner side of the rack assembly such that one side end of each cooking tray is slidably inserted; and
a ball housing coupled to a lower end of at least one of the vertical rack frames and configured to contact an upper frame of a base assembly, the ball housing including a ball configured to roll when the rack assembly rotates while supporting the at least one vertical rack frame;
the base assembly configured to support the rack assembly and provided with wheels to enable movement thereof; and
a rotation assembly configured to couple the base assembly and the rack assembly such that the rack assembly is rotatable on the base assembly.
